**Europäisches Patentamt**

**European Patent Office**

**Office européen des brevets**

(11) Veröffentlichungsnummer: **0 179 306**

**A1**

(12) **EUROPÄISCHE PATENTANMELDUNG**

(21) Anmeldenummer: 85112321.6

(22) Anmeldetag: 28.09.85

(51) Int. Cl.⁴: **A 47 J 31/54**
A 47 J 31/057, A 47 J 31/40

(30) Priorität: 09.10.84 DE 3436984

(43) Veröffentlichungstag der Anmeldung:
30.04.86 Patentblatt 86/18

(84) Benannte Vertragsstaaten:
AT BE CH DE FR GB IT LI LU NL SE

(71) Anmelder: Woltermann, Erich H.
Lübbecker Strasse 240
D-4950 Minden(DE)

(72) Erfinder: Woltermann, Erich H.
Lübbecker Strasse 240
D-4950 Minden(DE)

(74) Vertreter: Patentanwälte Dr. Solf & Zapf
Schlossbleiche 20 Postfach 13 01 13
D-5600 Wuppertal 1(DE)

(54) **Maschine zum Zubereiten heisser Getränke mit dosierter Flüssigkeitsentnahme.**

㉗ Eine Maschine zum Zubereiten heißer Getränke, wie Kaffee, Tee o.dgl., bestehend aus einem Gehäuse mit einem Wasserbehälter und einem Heizelement sowie mit einer Abgabeleitung mit Auslauf. Der Wasserbehälter (6) ist mit seiner durch ein Ventil (19) verschließbaren Öffnung nach unten einer ein bestimmtes Dosiervolumen aufnehmenden Ausnehmung (25) zugekehrt angeordnet und im übrigen luftdicht verschlossen, wobei der dem bestimmten Dosiervolumen entsprechende maximale Füllstand (Y-Y) in der Ausnehmung in der Öffnungsebene der Öffnung liegt, das Ventil (19) geschlossen ist und das Heizelement (27) das Dosiervolumen erhitzt.

FIG.3

EP 0 179 306 A1

Croydon Printing Company Ltd.

0179306

-1-

II/mj/3096

Herr Erich H. Woltermann, Lübbecker Str. 240,
4950 Minden

---

Maschine zum Zubereiten heißer Getränke mit
dosierter Flüssigkeitsentnahme

---

Die vorliegende Erfindung betrifft eine Maschine
zum Zubereiten heißer Getränke, wie Kaffee, Tee
o.dgl., bestehend aus einem Gehäuse mit einem Wasserbehälter und einem Heizelement sowie mit einer von
diesem abgehenden Abgabeleitung mit Auslauf.

Derartige Maschinen sind allgemein bekannt. Die Wasserbehälter dieser Maschinen werden mit einer bestimmten
Flüssigkeitsmenge Frischwasser gefüllt und danach
wird das gesamte im Wasserbehälter befindliche Frischwasser erhitzt und beispielsweise in einen mit Kaffeepulver gefüllten Kaffeefilter geleitet, um auf diese
Weise Kaffee herzustellen. Soll nur eine ganz bestimmte
Flüssigkeitsmenge, z.B. nur zum Zubereiten einer
einzelnen Tasse Kaffe, entnommen werden, ist es

-2-

entweder erforderlich, den Wasserbehälter nur entsprechend dieser gewünschten Kaffeemenge zu füllen oder aber die Maschine rechtzeitig auszuschalten. Dabei ist letztere Möglichkeit praktisch nicht durchführbar, da stets noch im Durchlauferhitzer befindliches heißes Wasser nachläuft. Damit ist es erforderlich, um bei den bekannten Maschinen eine dosierte Flüssigkeitszubereitung zu erreichen, jeweils nur den Wasserbehälter mit der jeweils gewünschten Menge zu füllen. Hierdurch ergibt sich aber eine sehr aufwendige und unpraktische Handhabung.

Der vorliegenden Erfindung liegt die Aufgabe zugrunde, eine Maschine der eingangs beschriebenen Art zu schaffen, bei der der Wasserbehälter einmal gefüllt wird und dann über einen gewissen Zeitraum ständig auf Wunsch eine dosierte Menge Wasserflüssigkeit entnommen werden kann, wobei ein einfacher und wartungsfreundlicher Aufbau ermöglicht werden soll.

Erfindungsgemäß wird dies dadurch erreicht, daß der Wasserbehälter mit seiner durch ein Ventil verschließbaren Öffnung nach unten einer ein bestimmtes Dosiervolumen aufnehmenden Ausnehmung zugekehrt angeordnet und im übrigen luftdicht verschlossen ist, wobei der dem bestimmten Dosiervolumen entsprechend maximale Füllstand in der Ausnehmung in der Öffnungsebene der Öffnung liegt und hierbei das Ventil geschlossen ist und das Heizelement das Dosiervolumen erhitzt. Hierbei ist das Heizelement vorzugsweise als Durchlauferhitzer ausgebildet und über eine Verbindungsleitung mit der Ausnehmung verbunden, und die Verbindungsleitung , der Durchlauferhitzer und die Abgabeleitung sind entsprechend dem Prinzip der kommunizierenden Röhren miteinander verbunden . Durch diese erfindungsgemäße Ausgestaltung wird sichergestellt, daß beim Öffnen des Ventils nur so lange Flüssigkeit dem Wasserbehälter entnommen wird, bis der Wasserstand in der das gewünschte Dosiervolumen aufnehmenden Ausnehmung den maximalen Füllstand erreicht hat. Denn ist der maximale Füllstand erreicht, wird der Luftzutritt zum Wasserbehälter unterbrochen, wodurch kein weiteres Wasser unten aus dem Wasserbehälter mehr austreten kann. Indem die das Dosiervolumen aufnehmende Ausnehmung in Verbindung mit den angeschlossenen Leitungen und dem Durchlauferhitzer zusammen in Verbindung mit dem maximalen Füllstand genau die gewünschte Dosiermenge Flüssigkeit enthalten, wird somit beim Öffnen des Ventils jeweils eine automatische Dosierung erreicht. Demnach wird erfindungsgemäß durch einmalige Betätigung dosiert eine gewisse Flüssigkeitsmenge, z.B. die Menge einer Tasse Getränk erhalten, ohne daß Wasser, Filter und Extrakt, z.B. Kaffeemehl, durch die Bedienungsperson zugeführt und dosiert werden müssen. Damit ist die erfindungsgemäße Maschine für eine Vielzahl von Einsatzbereichen geeignet, insbesondere da auch eine sehr einfache Handhabung beispielsweise nur mittels eines Betätigungshebels möglich ist. Für die erfindungsgemäße Maschine ergeben sich beispielsweise der Einsatz bei Selbstbedienung in Hotelzimmern, in Besprechungsräumen , Wohnwagen und Booten oder aber auch in Lastkraftwagen.

In den Unteransprüchen sind weitere vorteilhafte Ausführungsformen der Erfindung enthalten.

Anhand des in den beiliegenden Zeichnungen dargestellten Ausführungsbeispiels wird die Erfindung nunmehr näher erläutert.

Es zeigen:

Fig. 1 eine perspektivische Ansicht einer erfindungsgemäßen Maschine,

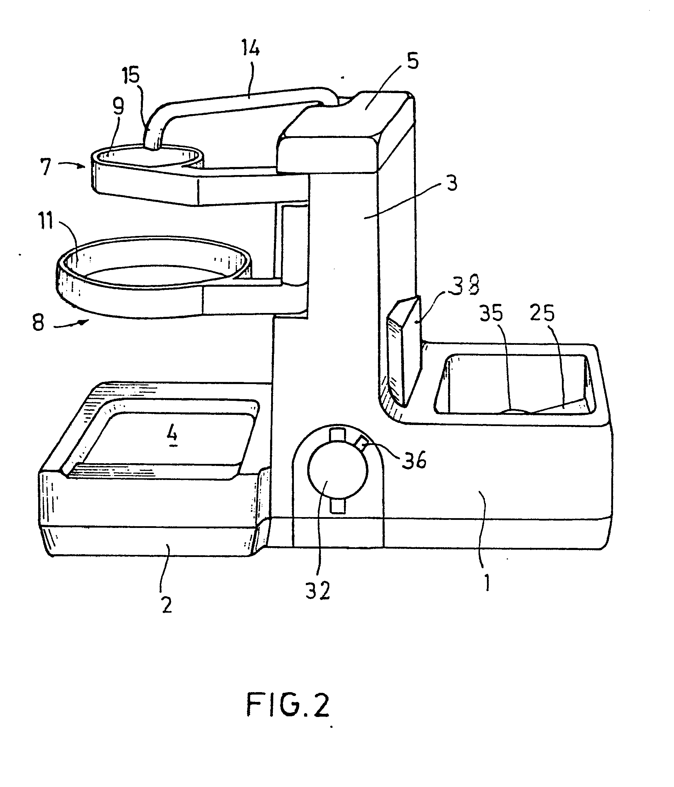

Fig. 2 eine Seitenansicht der Maschine gemäß Fig. 1 ohne Wasserbehälter,

Fig. 3 einen Schnitt durch die erfindungsgemäße Maschine gemäß der Schnittlinie III-III in Fig.2,

Fig. 4 einen Schnitt durch den erfindungsgemäßen Wasserbehälter der Maschine gemäß Fig.1 im in seine Einzelteile zerlegten Zustand.

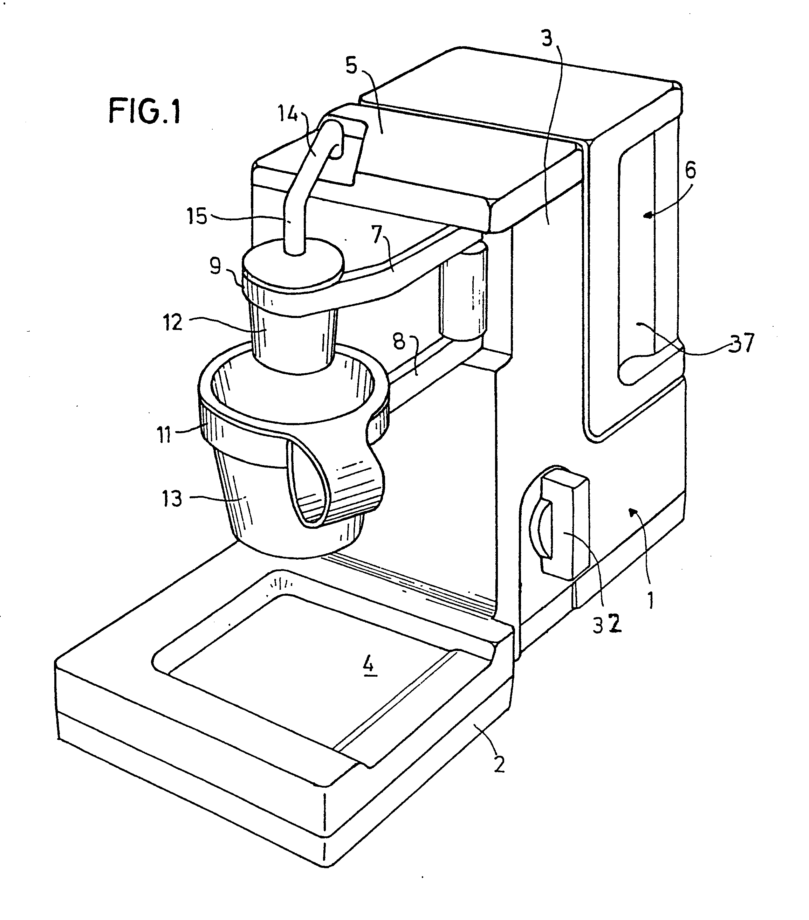

Wie sich aus Fig. 1 ergibt, besteht eine erfindungsgemäße Maschine zum Herstellen heißer Getränke,insbesondere zum Herstellen von Kaffee, aus einem Gehäuse 1, vorzugsweise aus Kunststoff. Dieses Gehäuse 1 besitzt einen Gehäuseboden 2, ein etwa im Querschnitt L-förmiges Gehäusemittelteil 3, eine im Gehäuseboden 2 ausgebildete Tropfschale 4 sowie einen den senkrechten Schenkel des Gehäusemittelteils 3 oben verschließenden Gehäusedeckel 5. Auf den waagerechten Schenkel des L-förmigen Gehäusemittelteils 3 ist ein Wasserbehälter abnehmbar aufgesetzt. An der dem Wasserbehälter 6 gegenüberliegenden Seite des senkrechten Schenkels des Gehäusemittelteils 3 sind zwei übereinander angeordnete schwenkbar am Gehäusemittelteil 3 befestigte Arme 7, 8 befestigt. Die Arme 7, 8 weisen Halteringe 9,11 auf, die Aufnahmeöffnungen umschließen. Der Durchmesser des Halteringes 9 ist derart dimensioniert, daß in ihn ein Kaffeefilter 12, siehe Fig. 1, eingesetzt werden kann und der Haltering 11 hat eine derartige Aufnahmeöffnung, daß in diesen eine Tasse oder ein ähnliches Gefäß eingesetzt und gehalten werden kann. Dabei sind die beiden Arme 7, 8 derart ausgebildet, daß in der in Fig. 1 dargestellten Arbeitsstellung, die senkrechten Mittelachsen der Aufnahmeöffnungen der Halteringe 9, 11 aufeinanderfallen. Die Arme 7, 8 sind getrennt voneinander verschwenkbar, so daß der Filter 12 oder das Gefäß 13 ungehindert von oben in die Aufnahmeöffnungen der Halteringe eingesetzt werden können. Aus dem Gehäusedeckel 5 tritt ein rohrförmiger Auslauf 14 aus, der an seinem freien Ende einen 90°-Bogen 15 besitzt, dessen Auslauföffnung genau in der Mittelachse der übereinander geschwenkten Halteringe 9, 11, siehe Fig. 1, liegt. Da die Arme 7, 8 schwenkbar sind, kann der Auslauf 14 starr befestigt sein. Es liegt im Rahmen der Erfindung, wenn der Wasserbehälter 6 nicht, wie dargestellt, abnehmbar ausgebildet ist, sondern mit dem Gehäuse 1 einstückig verbunden ist.

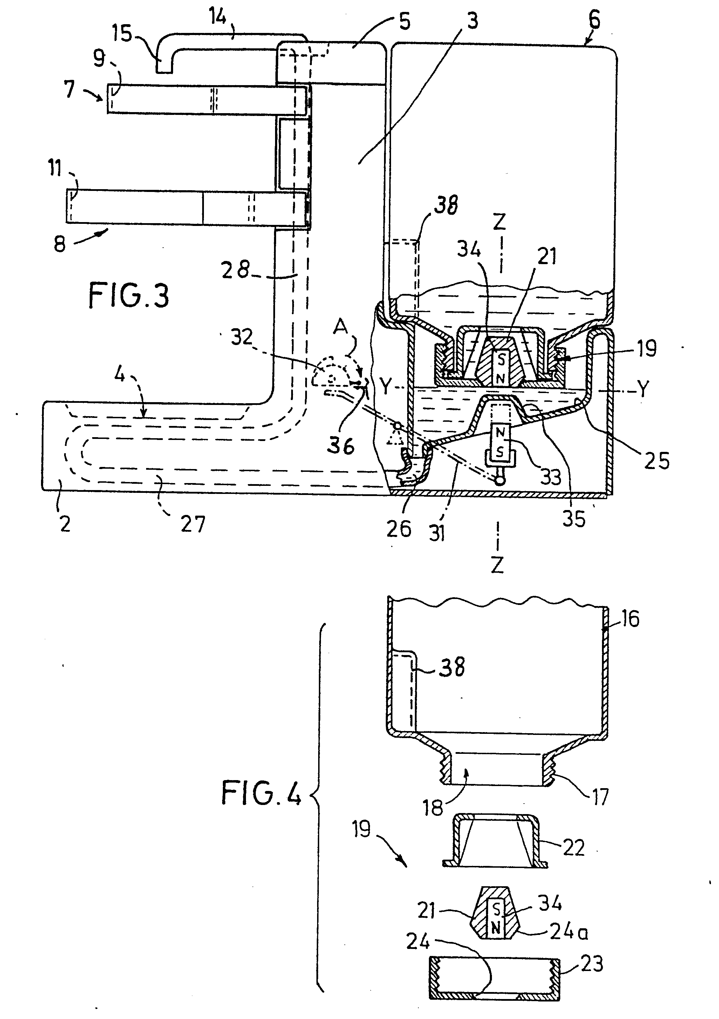

Wie sich aus Fig. 3 in Verbindung mit Fig. 4 ergibt, besteht der erfindungsgemäße Wasserbehälter 6 aus einem Behältnis 16, das vorzugsweise als Blasteil aus nicht durchsichtigem Kunststoff hergestellt ist. Dieses Behältnis 16 kann ein durchsichtiges Schauglas aufweisen, um den Füllstand von außen feststellen zu können. Das Behältnis 16 weist einen Gewindestutzen 17 mit einem Außengewinde auf, der die einzige Öffnung 18 des Behältnisses 16 umschließt. Die Öffnung 18 ist durch ein Ventil 19 verschließbar. Dieses Ventil 19 besteht vorzugsweise aus einem Dichtkegel 21, der in einer Kegelaufnahme 22, die in dem Gewindestutzen 17 eingesetzt ist, geführt ist und durch eine auf dem Gewindestutzen 17 aufschraubbare Schraubkappe 23 mit integriertem Dichtsitz 24 von außen gehalten wird. Der korrespondierende Dichtsitz des Dichtkegels 21 ist mit 24a gekennzeichnet. Anstelle eines Dichtkegels kann auch eine Kugel oder ein ähnliches Dichtelement verwendet werden. In Fig. 3 ist der erfindungsgemäße Wasserbehälter 6 im montierten Zustand, d.h. mit eingesetztem Ventil 19, dargestellt. Erfindungsgemäß wird der Behälter mit seiner Öffnung 18 auf den horizontalen Schenkel des Gehäusemittelteils 3 aufgesetzt. Dabei wird durch das Ventil 19 ein Austritt des im Wasserbehälter 6 befindlichen Wassers im aufgesetzten Zustand verhindert. Die Füllung des Wasserbehälters 6 erfolgt im abgenommenen Zustand, wobei der Behälter 6 um 180° gedreht wird, so daß die Öffnung 18 nach oben gerichtet ist und das Behältnis 16 über das in diesem Zustand offene Ventil 19 von oben vollständig mit Wasser gefüllt werden kann. Danach wird der gefüllte Wasserbehälter 6 wieder um 180° gedreht, wobei das Ventil 19 sofort die Öffnung 18 verschließt. Innerhalb des waagerechten Schenkels des Gehäusemittelteils 3 ist unterhalb des Wasserbehälters 6 eine Ausnehmung 25 eingeformt, deren Innenraum über eine Leitung 26 mit einem Durchlauferhitzer 27 verbunden ist. Anderendig ist der Durchlauferhitzer 27 über eine Steigeleitung 28 mit dem Auslauf 14 verbunden. Die Steigeleitung 28 verläuft im wesentlichen durch den senkrechten Schenkel des Gehäusemittelteils 3 und der Durchlaufhitzer 27 ist im Boden 2 des Gehäuses angeordnet. Der von der Ausnehmung 25 umschlossene Innenraum einschl. das Füllvolumen der Verbindungsleitung, des Durchlauferhitzers 27 und eines Abschnitts der Steigeleitung entsprechen in ihrem Gesamtvolumen genau einem ganz bestimmten Dosiervolumen. Dieses Dosiervolumen kann erfindungsgemäß genau dem Inhalt des Gefäßes 13 angepaßt sein, so daß mit der erfindungsgemäßen Maschine jeweils nur immer genau das Volumen erhitzt und gefüllt wird, das einem Gefäßinhalt entspricht. Die Funktionsweise ist nun erfindungsgemäß wie folgt. Es wird der mit Wasser gefüllte Wasserbehälter 6 mit seiner Öffnung nach unten auf das Gehäuseteil 3 aufgesetzt. In diesem Zustand wird die Öffnung des Wasserbehälters durch das Ventil 19 verschlossen. Die Ventilöffnung befindet sich dabei unmittelbar oberhalb der Ausnehmung 25, wobei die Ausnehmung 25 von oben durch den aufgesetzten Wasserbehälter 6 verschlossen wird. Die Ebene, in der die Ventilöffnung liegt, bestimmt die Füllhöhe der Ausnehmung 25. Diese Füllhöhe bzw. der maximale Füllstand ist durch die Linie Y-Y in Fig.3 eingezeichnet. Wird nun das Ventil geöffnet, indem der Dichtkegel 21 nach oben, d.h. in den Wasserbehälter hinein verschoben wird, wird ein Ringspalt im Ventil 19 freigegeben, durch das das im Wasserbehälter 6 befindliche Wasser hindurchströmen kann, so daß das Wasser von oben nach unten austritt. Hierbei ist der erfindungsgemäße Wasserbehälter 6 derart ausgebildet, daß keine zusätzliche

-8-

Ent- oder Belüftung des Wasserbehälters erfolgen kann. Das nach unten austretende Wasser fließt in die Ausnehmung 25, die das Dosiervolumen im wesentlichen bestimmt sowie in die angeschlossenen Leitungen einschl. des Durchlauferhitzers. Erreicht nun die in der Ausnehmung 25 angesammelte Flüssigkeitsmenge von unten kommend den Füllstand Y-Y und damit den Ventilsitz,d.h. die vom Ventil zu schließende Öffnung 18, so wird der Luftzutritt in dem Wasserbehälter 6 abgesperrt. Hierdurch wird ein weiteres Ausfließen des Wassers aus dem Wasserbehälter verhindert, so daß damit eine ganz bestimmte Dosiermenge aus dem Wasserbehälter 6 entnommen wird. Diese Dosiermenge entspricht beispielsweise der von dem Gefäß 13 aufnehmbaren Flüssigkeitsmenge. Nach dem Austritt der jeweiligen Dosiermenge wird das Ventil 19 wieder verschlossen, so daß kein Wasser mehr aus dem Wasserbehälter austreten kann. Mit dem Abfüllen der Dosiermenge schaltet der Durchlauferhitzer ein und erhitzt das in der Ausnehmung befindliche Wasser, wobei dies über die Steigeleitung 28 und den Auslauf 14 im erhitzten Zustand herausgefördert wird, und zwar bis die Ausnehmung 25 vollständig entleert ist. Hierzu ist es zweckmäßig, wenn die Leitung 26 an einem tiefsten Punkt der Ausnehmung angeordnet ist, so daß die Ausnehmung einen Boden mit leichtem Gefälle zum tiefsten Punkt besitzt. Aufgrund der erfindungsgemäßen Anordnung bilden die Ausnehmung 25 mit ihrem Innenraum, der Schlauch 26,der Durchlauferhitzer 27 und die Steigeleitung 28 eine nach dem Prinzip der kommunizierenden Röhren arbeitende Einheit. Das von dem Durchlauferhitzer geförderte Wasser besitzt vorzugsweise eine Temperatur von 92 bis 96° Celsius.

Die Betätigung des Ventils 19 erfolgt erfindungsgemäß zweckmäßigerweise über ein Hebelgestänge 31. Dieses Hebelgestänge 31 ist einseitig mit einem Drehknopf 32 verbunden und anderendig mit einem Magneten 33. Dieser Magnet 33 ist ein Dauermagnet mit einer Nord-Südpolarität, wobei er derart ausgerichtet ist, daß einer seiner beiden Pole in Richtung auf das Ventil 19 bzw. auf den Dichtkegel 21 ausgerichtet ist, wobei zweckmäßigerweise die Mittelachse Z-Z des beispielsweise als Stabmagneten ausgebildeten Magneten 33 mit der Mittelachse des Dichtkegels 21 zusammenfällt. In dem Dichtkegel 21 ist ebenfalls ein Permanentmagnet 34 angeordnet, und zwar derart, daß gleichnamige Pole der beiden Magneten einander gegenüberliegen. D.h., wenn, wie im dargestellten Ausführungsbeispiel, der Magnet 33 an seinem dem Ventil zugekehrten Ende als Nordpol ausgebildet ist, ist der Magnet 34 an seinem dem Magnet 33 zugekehrten Ende ebenfalls als Nordpol ausgebildet. Durch Drehung des Drehknopfes 32 beispielsweise in Pfeilrichtung A erfolgt über das Hebelgestänge 31 eine Verschiebung des Magneten 33 in der Achse Z-Z in Richtung auf den Dichtkegel 21. Dabei ist durch eine entsprechende kegelstumpfförmige Auswölbung 35 innerhalb der Ausnehmung 25 sichergestellt, daß der Magnet 33 sehr nahe an den Dichtkegel 21 herangeführt werden kann. Da gleichnamige Pole eine abstoßende Wirkung aufeinander haben und der Magnet 33, der mit dem Hebelgestänge 31 verbunden ist, nicht ausweichen kann, wird durch die magnetische Kraft der Dichtkegel 21 im Ventil 19 angehoben und somit ein Ringspalt zum Durchtritt des Wassers im Wasserbehälter 6 im Ventil freigegeben. Bei Weiterdrehung des Drehknopfes 32 wird dann wieder der Magnet 33 abgesenkt, so daß das Ventil 19 aufgrund des Wasserdrucks , der auf den Dichtkegel 21 wirkt, automatisch geschlossen wird. Der Drehweg des Drehknopfes 32 und damit die Öffnungszeit des Ventils 19 ist derart bemessen, daß sichergestellt ist, daß soviel Wasser aus dem Wasserbehälter 6 herausfließen kann, wie zum vollständigen Füllen des Füllstandes Y-Y der Ausnehmung 25 erforderlich ist. Durch das Öffnen des Ventils über Magnetkraft wird praktisch eine indirekte Betätigung des Ventils erfindungsgemäß verwirklicht, was den Vorteil hat, daß in dem für den Benutzer zugänglichen Bereich der Ausnehmung zur Aufnahme des Dosiervolumens ,der von Fall zu Fall gereinigt werden muß, keine Betätigungselemente vorhanden sind. Weiterhin werden damit auch Undichtigkeiten in diesem Bereich ausgeschlossen.

Durch die Betätigung des Drehknopfes bzw. die Betätigung des Hebels 32 wird nicht nur das Ventil 19 geöffnet und geschlossen, sondern hiermit erfolgt auch gleichzeitig das Einschalten des Durchlauferhitzers 27. Der über den Drehknopf betätigte Schalter 36 zum Einschalten des Durchlauferhitzers 27 ist zweckmäßigerweise gleichzeitig als Trockengehschutz/Temperatursicherung ausgebildet, und zwar beispielsweise in Form eines Bimetallschaltelementes. Im eingeschalteten Zustand des Durchlauferhitzers wird nun so lange Wasser befördert, bis das gesamte Dosiervolumen entleert ist. Durch das fehlende Wasser im Durchlauferhitzer erhöht sich gegen Ende des Fördervorganges die Gehäusetemperatur am Durchlauferhitzer derart stark, daß der Bimetall-Schalter auslöst und dadurch den Durchlauferhitzer abschaltet. Damit dient erfindungsgemäß die Temperatursicherung sowohl als Ein- als auch als Ausschalter des Durchlauferhitzers.

Wie sich aus Fig. 1 ergibt, weist der Wasserbehälter 6 an seiner Außenseite Griffmulden 37 auf und ist, siehe Fig. 4, an seinem dem Gehäusemittelteil 3 zugekehrten Bereich mit einer Schwalbenschwanzführung 38 versehen, so daß eine sichere Halterung des Behälters am Gehäuse 1 gewährleistet ist.

Das von der Ausnehmung 25 aufnehmbare Dosiervolumen kann beispielsweise durch Einlagerung von Blindteilen im Innenraum der Ausnehmung in einer gewissen Bandbreite nachträglich eingestellt werden, so daß eine genaue Eichung möglich ist.

Aufgrund dessen, daß mit der erfindungsgemäßen Maschine eine genau abgemessene, dosierte Flüssigkeitsmenge pro Einschaltvorgang erhitzt und gefördert wird, ist es zweckmäßig, wenn in dem Filter 12 eine genau auf das Dosiervolumen angepaßte Menge von beispielsweise Kaffeepulver enthalten ist. Dies kann beispielsweise mittels bekannter, entsprechend portionierter Kaffeepackungen leicht erreicht werden, die sich in dem Filter befinden und mit diesem eine Einheit bilden können.

Hierbei liegt es weiterhin im Rahmen der Erfindung, wenn die erfindungsgemäße Maschine mit einem Magazin versehen ist, das mehrere portioniert abgepackte Kaffeemengen mit integriertem Filter aufweist. Dieses Magazin befindet sich unterhalb des Auslaufs 14 und kann beispielsweise ring- oder streifenförmig ausgebildet sein. Zusätzlich können auch Einzelpackungen verwendet werden. Dabei ist erfindungsgemäß dann vorgesehen, daß mit Betätigung des Betätigungshebels 32 neben den o.a. beschriebenen Funktionen auch das Magazin um jeweils eine Position weiterbewegt wird. Das Beschicken bzw. das Einsetzen des Magazines geschieht entweder von oben oder durch einen seitlichen Einschub. Dabei kann weiterhin vorgesehen sein, daß das Betätigen und Starten des Dosiervorganges und das Erhitzen und Fördern des Wassers blockiert ist, wenn der letzte Magazineinsatz verbraucht ist. Somit wird verhindert, daß nur heißes Wasser gefördert wird.

Die Erfindung ist nicht auf das beschriebene Ausführungsbeispiel beschränkt, sondern umfaßt alle im Sinne der Erfindung gleichwirkenden Mittel. So kann z.B. die Betätigungsvorrichtung zum Öffnen des Ventils aus einem bis zum Ventil durchgehenden, mit diesem zum Öffnen und Schließen verbundenen Gestänge ausgebildet sein, wobei auch ein Kugelsitz im Ventil vorgesehen sein kann.

0179306

-1-

Ansprüche:

1. Maschine zum Zubereiten heißer Getränke, wie Kaffee, Tee o.dgl., bestehend aus einem Gehäuse mit einem Wasserbehälter und einem Heizelement sowie mit einer Abgabeleitung mit Auslauf, d a d u r c h g e k e n n z e i c h n e t, daß der Wasserbehälter (6) mit seiner durch ein Ventil (19) verschließbaren Öffnung (18) nach unten einer ein bestimmtes Dosiervolumen aufnehmenden Ausnehmung (25) zugekehrt angeordnet und im übrigen luftdicht verschlossen ist, wobei der dem bestimmten Dosiervolumen entsprechende maximale Füllstand (Y-Y) in der Ausnehmung (18) in der Öffnungsebene der Öffnung (18) liegt, wobei das Ventil (19) geschlossen ist und das Heizelement (27) das Dosiervolumen erhitzt.

2. Maschine nach Anspruch 1, d a d u r c h g e k e n n z e i c h n e t, daß das Heizelement als Durchlauferhitzer (27) ausgebildet und über eine Verbindungsleitung (26) mit der Ausnehmung verbunden ist, sowie die Ausnehmung (25), die Verbindungsleitung (26), der Durchlauferhitzer (27) und die Abgabeleitung (28) entsprechend dem Prinzip der kommunizierenden Röhren untereinander verbunden sind.

3. Maschine nach Anspruch 1 oder 2, d a d u r c h g e -
k e n n z e i c h n e t, daß der Ventilkörper
(21) des Ventils (19) vorzugsweise durch Magnetkraft
zum Öffnen des Ventils verschiebbar ausgebildet ist.

4. Maschine nach Anspruch 3, d a d u r c h
g e k e n n z e i c h n e t, daß im Ventilkörper
(21) ein Magnet (34) angeordnet ist und im Gehäuse
(1) außerhalb der Ausnehmung (25) dem Magnet des
Ventilkörpers (21) gegenüberliegend ein zweiter
Magnet (32) derart verschiebbar gelagert ist,
daß die gleichnamigen Pole beider Magneten (33,34)
einander zugekehrt sind und der zweite Magnet
(33) über eine Betätigungsvorrichtung (32, 32)
auf den Ventilkörper (21) zu-und von diesem wegbewegbar ist.

5. Maschine nach Anspruch 4, d a d u r c h g e -
k e n n z e i c h n e t, daß die Betätigungsvorrichtung aus einem Hebelgestänge (31) und einem
an diesem einseitig angreifenden Betätigungshebel(32),
insbesondere einem Drehknopf, besteht und das
dem Drehknopf gegenüberliegende Ende des Hebelgestänges (31) mit dem außerhalb der Ausnehmung
liegenden Magneten (33) verbunden ist.

6. Maschine nach einem oder mehreren der Ansprüche
1 bis 5, d a d u r c h g e k e n n z e i c h n e t,
daß der Wasserbehälter (6) aus einem Behältnis
(16) mit einem die Öffnung (18) umfassenden Gewindestutzen (17) mit Außengewinde besteht, wobei in
den Gewindestutzen (17) eine Führungsaufnahme,
insbesondere eine Kegelaufnahme (22) eingesetzt
ist, in der der als Dichtkegel (21) ausgebildete

-3-

Ventilkörper geführt und auf den Gewindestutzen
eine Schraubkappe (23) aufschraubbar ist, die
an ihrer Innenseite einen mit dem Dichtsitz (24a)
des Dichtkegels (21) korrespondierenden Dichtsitz
(24) besitzt.

7. Maschine nach einem oder mehreren der Ansprüche
1 bis 6, d a d u r c h   g e k e n n z e i c h -
n e t , daß der Wasserbehälter (6) lösbar die Ausnehmung (25) im aufgesetzten Zustand verschließend
am Gehäuse (1) befestigt ist.

8. Maschine nach einem oder mehreren der Ansprüche
1 bis 7, d a d u r c h   g e k e n n z e i c h -
n e t , daß an der dem Wasserbehälter gegenüberliegenden Seite des Gehäuses Arme (7, 8) mit Halteringen (9, 11) zur Aufnahme eines Filtereinsatzes
und eines Aufnahmegefäßes schwenkbar übereinander
angeordnet sind, wobei in der Gebrauchsstellung
die Mittelachsen der Halteringe aufeinanderfallen.

9. Maschine nach einem oder mehreren der Ansprüche
3 bis 8, d a d u r c h   g e k e n n z e i c h -
n e t , daß in der Ausnehmung (25) eine Auswölbung
(35) ausgebildet ist, die unmittelbar unter dem
Ventil (19) des aufgesetzten Wasserbehälters endet
und innerhalb der Magnete (33) verschiebbar geführt
ist.

10. Maschine nach einem oder mehreren der Ansprüche 1 bis 9, d a d u r c h  g e k e n n z e i c h - n e t, daß der Auslauf (14) fest angeordnet ist und seine Auslauföffnung mittig oberhalb der Halteringe (9, 11) in der Benutzungsstellung der Halteringe liegt.

11. Maschine nach einem oder mehreren der Ansprüche 1 bis 10, d a d u r c h  g e k e n n z e i c h - n e t, daß mit dem vorzugsweise als Drehknopf (32) ausgebildeten Betätigungshebel ein elektrischer Schalter zum Ein- und Ausschalten des Durchlauferhitzers betätigbar ist.

12. Maschine nach Anspruch 11, d a d u r c h  g e - k e nn z e i c h n e t, daß der Ein- und Ausschalter als temeperaturabhängiger Bimetall-Schalter ausge- bildet ist.

FIG.1

FIG.2

3096

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 349 964 (LADONICZKI et al.) <br> * Figur 4; Spalte 6, Zeile 68 - Spalte 7, Zeile 3 * | 1,6,7 | A 47 J 31/54 <br> A 47 J 31/057 <br> A 47 J 31/40 |
| | --- | | |
| X | GB-A-1 057 957 (INST.-O-MATIC) <br> * Seite 3, Zeilen 48-85; Figuren 2,3 * | 1,6,7 | |
| | --- | | |
| X | DE-A-2 645 472 (HANSSMANN) <br> * Seite 17, letzter Absatz; Seite 18, erster Absatz; Figuren 5,6 * | 1 | |
| Y | | 2 | |
| | --- | | |
| Y | DE-A-2 855 412 (BOSCH-SIEMENS) <br> * Insgesamt * | 2 | RECHERCHIERTE SACHGEBIETE (Int. Cl.4) |
| | --- | | |
| A | US-A-2 568 474 (VANSCIVER) <br> * Figur 5 * | 1,2 | A 47 J |
| | --- | | |
| A | FR-A- 568 376 (PILAIN) <br> * Insgesamt * | 1,2 | |
| | --- | | |
| A | FR-A- 367 005 (MONTAGNE) <br> * Insgesamt * | 1,2 | |
| | --- | | |
| A | US-A-3 178 557 (UMANN) <br> * Insgesamt * | 1 | |
| | ---     -/- | | |

Der vorliegende Recherchenbericht wurde für alle Patentansprüche erstellt.

| Recherchenort <br> DEN HAAG | Abschlußdatum der Recherche <br> 21-01-1986 | Prüfer <br> SCHARTZ J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03 82

**Europäisches Patentamt**

**EUROPÄISCHER RECHERCHENBERICHT**

**0179306**
Nummer der Anmeldung

EP 85 11 2321

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | DE-B-2 614 782 (DAGMA) <br> * Insgesamt * <br><br> ----- | 3,4 | |

| | | | RECHERCHIERTE SACHGEBIETE (Int. Cl.4) |
|---|---|---|---|
| | | | |

Der vorliegende Recherchenbericht wurde für alle Patentansprüche erstellt.

| Recherchenort | Abschlußdatum der Recherche | Prüfer |
|---|---|---|
| DEN HAAG | 21-01-1986 | SCHARTZ J. |